# EUROPÄISCHE PATENTSCHRIFT

(11) **EP 2 325 628 B1**
(45) Veröffentlichungstag und Bekanntmachung des Hinweises auf die Patenterteilung: **26.06.2013**
(21) Anmeldenummer: 09176757.4
(22) Anmeldetag: 23.11.2009
(51) Int. Cl.: G01N 25/48

(54) **Thermoanalysevorrichtung**
Thermal analysis device
Dispositif de thermo-analyse

(43) Veröffentlichungstag der Anmeldung: 25.05.2011
(73) Patentinhaber: Mettler-Toledo AG, 8606 Greifensee (CH)
(72) Erfinder: Schärer, Corinne, 8340, Hinwil (CH); Eßer, Ulrich, 8630, Rüti (CH); Hütter, Thomas, 5443, Niederrohrdorf (CH)

(56) Entgegenhaltungen:
- US-B1- 6 535 824
- BENOIST L ET AL: "Integrated circuit thermal analysis: A new thermal technique for polymer characterization" JOURNAL OF THERMAL ANALYSIS AND CALORIMETRY, KLUWER ACADEMIC PUBLISHERS, DO, Bd. 59, Nr. 1-2, 1. Januar 2000 (2000-01-01), Seiten 351-358, XP019253176 ISSN: 1572-8943
- WANG L ET AL: "Demonstration of MEMS-based differential scanning calorimetry for determining thermodynamic properties of biomolecules" SENSORS AND ACTUATORS B, ELSEVIER SEQUOIA S.A., LAUSANNE, CH, Bd. 134, Nr. 2, 25. September 2008 (2008-09-25), Seiten 953-958, XP025429996 ISSN: 0925-4005 [gefunden am 2008-07-22]
- DOETTINGER-ZECH S G ET AL: "Simple microcalorimeter for measuring microgram samples at low temperatures" REVIEW OF SCIENTIFIC INSTRUMENTS, AIP, MELVILLE, NY, US, Bd. 72, Nr. 5, 1. Mai 2001 (2001-05-01), Seiten 2398-2406, XP012039141 ISSN: 0034-6748

## Beschreibung

Die Erfindung betrifft eine Thermoanalysevorrichtung mit einem austauschbaren Sensor, insbesondere einem MEMS-Sensor.

Der Begriff der Thermoanalyse umfasst verschiedene Messmethoden, zu denen unter anderem die Kalorimetrie, DSC (differential scanning calorimetry), TGA (thermo gravimetric analysis), die Bestimmung der Dielektrizitätskonstante sowie Kombinationen dieser Methoden zählen.

Die Umsetzung dieser Verfahren auf, mit oder durch einen geeigneten Sensor, insbesondere einem MEMS basierten Sensor (MEMS: Micro-Electro-Mechanical Systems), ist besonders vorteilhaft für die Analyse kleiner Proben oder extremer thermischer Vorgänge. Als kleine Proben, werden hier Proben mit Abmessungen im Submillimeter-Bereich und Gewichten im Mikrogramm- und Nanogramm-Bereich verstanden.

Ein Sensor im Sinne dieser Erfindung ist vorzugsweise ein MEMS-Sensor, welcher einen integrierten Schaltkreis umfasst, der derart ausgestaltet ist, dass mit oder auf diesem Sensor eine thermoanalytische Messung an einer Probe durchgeführt werden kann. Vorzugsweise handelt es sich dabei um einen DSC- oder TGA-MEMS-Sensor, um einen MEMS-Sensor zur Bestimmung der Dielektrizitätskonstante oder eine Kombinationen daraus, mit welchem mindestens eine thermoanalytische Eigenschaft einer auf dem Sensor angeordneten Probe oder des Sensors ermittelt werden kann. Es kann zwischen aktiven und passiven Sensoren unterschieden werden, wobei ein aktiver Sensor aktive Bauelemente, wie beispielsweise Heizwiderstände aufweist, und ein passiver Sensor beispielsweise über eine externe Temperiereinheit einem Temperaturprogramm unterworfen wird. Derartige Sensoren weisen zumindest eine Messposition für eine Probe auf, können jedoch auch mehrere Messpositionen für mindestens eine Probe und mindestens eine Referenz aufweisen. Bislang werden MEMS-Sensoren vor allem in Forschungslaboratorien eingesetzt, wodurch ihre Eignung für thermoanalytische Verfahren und Methoden aufgezeigt werden konnte und woraus Verbesserungen im Sensor-Design hervorgegangen sind.

Ein MEMS basierter Sensor, hier auch als MEMS-Sensor bezeichnet, eignet sich auf Grund seiner Dimensionen und thermischen Eigenschaften für die Analyse temperaturabhängiger Phänomene sehr kleiner Proben und ermöglicht im Vergleich zu den derzeit kommerziell erhältlichen Geräten sehr schnelle Heiz- und/oder Kühlraten, da die zu temperierenden Bauteile und auch die Probe kleine thermische Massen aufweisen.

Einen Überblick über die Verwendung von unterschiedlichen MEMS-Sensoren als Kalorimeter zur Analyse sehr dünner Filme und Proben mit Massen im Mikrogramm- oder sogar Nanogramm-Bereich gibt beispielsweise A. W. van Herwaarden in "Overview of Calorimeter Chips for Various Applications", Thermochimica Acta, 432 (2005), 192-201.

Forschungs-Geräte mit MEMS-Sensoren eignen sich jedoch nicht uneingeschränkt für den kommerziellen Einsatz, bei dem der Anwender sowohl eine hohe Reproduzierbarkeit und Zuverlässigkeit der Messergebnisse, einen geringen Zeitaufwand pro Messung sowie eine anwenderfreundliche Handhabung erwartet. In einem Forschungslabor werden meist offene Systeme verwendet, die es dem Experimentator erlauben, jederzeit in den experimentellen Aufbau einzugreifen und diesen zu optimieren oder an ein geplantes Experiment anzupassen.

In der Forschung hat es sich als günstig erwiesen, wenn die Probe zur Untersuchung bzw. Messung direkt auf den Sensor aufgebracht wird. Die Untersuchung von Temperaturphänomenen der Probe kann daher auch dazu führen, dass die Probe fest mit dem Sensor verschmilzt, so dass der Probenwechsel mit einem Wechsel des Sensors einhergeht.

Bei kommerziellen Geräten wird das direkte Eingreifen in den experimentellen Aufbau durch den Anwender im Allgemeinen ausgeschlossen oder zumindest stark eingeschränkt, um die Anwenderfreundlichkeit eines Gerätes zu erhöhen, was auch einen einfachen und schnellen Probenwechsel erfordert, welcher in Forschungs-Geräten weder gefordert noch notwendig ist.

Insbesondere beim Betreiben von Sensoren im Tieftemperaturbereich können verschiedene Probleme auftreten, wie beispielsweise eine Kondenswasserbildung oder eine Vereisung von einzelnen Bauteilen oder der gesamten Vorrichtung als Folge von wiederholten Heiz-Kühl-Zyklen. Gerade bei einem kommerziellen Gerät ist es wünschenswert, die Kondenswasserbildung, das Eindringen von Kondenswasser in die Vorrichtung, vor allem in die Elektronik, und insbesondere ein Vereisen zu verhindern, um dadurch auftretende Artefakte weitestgehend zu unterdrücken. Zudem ist es wünschenswert, wenn die Stand- oder Abtauzeiten zwischen zwei Messungen möglichst kurz und somit der Probendurchsatz hoch gehalten werden können.

Als Aufgabe ergibt sich daher die Bereitstellung einer kommerziell einsetzbaren Thermoanalysevorrichtung, mit welcher ein stabiles und reproduzierbares Messverhalten realisiert werden kann und welche zudem eine kompakte Bauweise, eine einfache Handhabung insbesondere beim Sensorwechsel und einen geringen Zeitaufwand pro Messung aufweist.

Gelöst wird diese Aufgabe durch eine Thermoanalysevorrichtung mit einem austauschbaren Sensor, insbesondere einem MEMS-Sensor, mit einem Sensorhalter, welcher eine Aufnahme für den austauschbaren Sensor aufweist, mit einem elektrischen Kontaktmittel zur Kontaktierung des Sensors, mit einem Kühlelement zum Abkühlen der Thermoanalysevorrichtung und mit einem Heizelement. Das elektrische Kontaktmittel weist mindestens ein Kontaktelement auf, welches mit dem eingesetzten Sensor kontaktiert ist. Das Kontaktelement weist ein freies Ende zur Kontaktierung des Sensors und benachbart zum freien Ende einen Anschlag, so dass das Kontaktelement bei eingesetztem Sensor über das freie Ende und bei ausgebautem Sensor über den Anschlag thermisch mit dem Heizelement verbunden ist und so auch bei ausgebautem Sensor im Wesentlichen unabhängig vom Betriebszustand des Kühlelements aufgeheizt oder erwärmt werden kann.

Auf diese Weise kann der Sensor vor einem Austausch unabhängig von der restlichen Thermoanalysevorrichtung auf eine gewünschte bzw. geeignete Temperatur erwärmt werden. Das Kontaktelement kann unabhängig vom Betriebszustand des Kühlelements, insbesondere bei laufendem oder aktivem Kühlelement, und unabhängig von der Temperatur der restlichen Thermoanalysevorrichtung aufgeheizt oder erwärmt werden.

Als "eingesetzt" oder "eingebaut" wird der Sensor bezeichnet, wenn er sich in der Thermoanalysevorrichtung befindet, als "ausgebaut", wenn er sich nicht darin befindet.

Die Thermoanalysevorrichtung kann für passive oder für aktive Sensoren ausgelegt sein, wobei aktive Sensoren bevorzugt werden. Ein aktiver Sensor umfasst integrierte Mittel zur Einstellung eines vorgegebenen Temperaturprogramms von Temperatur-Zeit-Sollwerten, ein passiver Sensor ist mit einer externen, also einer nicht im Sensor integrierten, Temperiereinheit thermisch verbunden, mit der die Temperatur des Sensors kontrolliert werden kann. Bei einem Sensor-Wechsel kann ein aktiver Sensor vollständig ausgetauscht werden, bei einem passiven Sensor wird nur der Sensor nicht jedoch die Temperiereinheit ausgetauscht. Die externe Temperiereinheit ist vorzugsweise ein Bestandteil der Thermoanalysevorrichtung. Zudem kann die Thermoanalysevorrichtung sowohl zur Ansteuerung eines in der Vorrichtung angeordneten Sensors, mittels dessen die thermoanalytischen Eigenschaften einer mit dem Sensor verbundenen Probe bestimmt werden können, als auch zur Bestimmung von thermischen oder thermoanalytischen Eigenschaften des MEMS-Sensors selbst, um z. B. Informationen bezüglich seiner thermischen Stabilität oder seiner Funktionsfähigkeit bei unterschiedlichen Temperaturen zu erhalten, verwendet werden. Der Sensor kann mindestens eine Messposition für eine Probe oder auch mehrerer Messpositionen für mindestens eine Probe und mindestens eine Referenz aufweisen.

Vorteilhaft an einer derartigen Thermoanalysevorrichtung ist, dass insbesondere die Temperatur der Bauteile in der Nähe der Aufnahme für den Sensor, sowie die Temperatur eines eingesetzten Sensors kontrolliert und geregelt werden können, so dass ein Sensor schnell und einfach gewechselt oder ausgetauscht werden kann, sogar unter Beibehaltung sehr tiefer Temperaturen im Inneren der Thermoanalysevorrichtung. Der einfache und schnelle Austausch des Sensors wird ermöglicht, indem die Temperatur des Kontaktelements unabhängig vom Betriebszustand des Kühlelements geändert oder eingestellt werden kann. Das Kontaktelement kann somit bei laufender Kühlung und damit unabhängig von der Temperatur der restlichen Thermoanalysevorrichtung erwärmt werden. Neben einem einfachen und schnellen Austausch des Sensors wird so auch die Reproduzierbarkeit der Messergebnisse verbessert, da nach einem Wechsel der Sensor sehr rasch und mit einer hohen Kühlrate, wieder abgekühlt werden kann, so dass thermoanalytische Messungen ganz oder teilweise bei kryogenen Temperaturen bzw. kryogenen Anfangstemperaturen durchgeführt werden können. Als "kryogene Temperaturen" werden hier Temperaturen verstanden die deutlich unterhalb von 0°C liegen, vorzugsweise in einem Bereich von ca. -20°C bis in die Nähe des thermodynamischen Nullpunkts, insbesondere bis etwa -200°C.

Das Heizelement und/oder das Kühlelement kann zur Kontrolle der Temperatur der Thermoanalysevorrichtung, genauer der thermisch mit diesen verbundenen Bauteilen und des Innenraums der Thermoanalysevorrichtung, verwendet werden, so dass diese Bauteile und der Innenraum auf eine vorgegebene Temperatur eingeregelt oder einem Temperaturprogramm aus vorgegebenen Temperatur-Zeit-Werten unterworfen werden können.

Der Austausch des Sensors kann durchgeführt werden, ohne dass das Kühlelement abgeschaltet und/oder die gesamte Thermoanalysevorrichtung erwärmt werden muss, da das Kontaktelement unabhängig vom Betriebszustand des Kühlelements, also auch bei aktivem oder laufendem Kühlelement, aufgeheizt werden kann. Dadurch wird einerseits ein rascher Austausch des Sensors sowie auch nach dem Einsetzen dessen rasches Abkühlen auf eine gewünschte Starttemperatur ermöglicht.

Das gezielte Aufheizen bestimmter Bauteile der Thermoanalysevorrichtung, insbesondere des Kontaktelements, ist zudem vorteilhaft, da so ein Vereisen der Thermoanalysevorrichtung während des Betriebs im Wesentlichen verhindert werden kann, was sowohl die Reproduzierbarkeit der Ergebnisse verbessert und positiv beeinflusst, als auch die Lebensdauer der Kontaktelemente sowie weiterer elektrischer und elektronischer Komponenten der Vorrichtung verlängert.

Ein Ende des Kontaktelements ist mit dem Sockel des Kontaktmittels verbunden, das andere Ende ist das freie Ende zur Kontaktierung des Sensors, wobei das Kontaktelement benachbart zu seinem freien Ende den Anschlag aufweist. Das Kontaktelement ist sowohl bei eingesetztem, wie auch bei ausgebautem Sensor thermisch mit dem Heizelement verbunden, so dass die Temperatur des Kontaktelements beim Ausbau oder Wechsel unabhängig vom restlichen Thermoanalysegerät und vom Sensor geregelt werden kann.

Der thermische Kontakt zwischen dem Heizelement und dem Kontaktelement wird bei ausgebautem Sensor über den Anschlag am freien Ende des Kontaktelements und bei eingesetztem Sensor über den Kontakt des freien Endes mit dem Sensor hergestellt.

Befindet sich ein Sensor in der Thermoanalysevorrichtung, so wird dieser über das freie Ende des Kontaktelements elektrisch kontaktiert. Das Kontaktelement befindet sich im thermischen und elektrischen Kontakt mit dem Sensor und kann über den Sensor und den Sensorhalter, welcher vorzugsweise thermisch mit dem Heizelement verbunden ist, beheizt werden.

Befindet sich kein Sensor in der Thermoanalysevorrichtung, so ist das Kontaktelement über seinen Anschlag thermisch mit dem Heizelement verbunden.

Die thermische Masse der gesamten Vorrichtung ist vorzugsweise gross gegenüber den thermischen Massen der mit dem Heizelement thermisch verbundenen Bauteile, so dass eine Erwärmung einzelner oder mehrerer dieser Bauteile bei laufendem Kühlelement schnell möglich ist.

Weiterhin kann die Vorrichtung ein Zwischenstück aufweisen, welches thermisch leitend und elektrisch isolierend ist, eine Durchführung für das Kontaktelement aufweist und thermisch mit dem Heizelement verbunden ist. Dieses Zwischenstück ist vorzugsweise an der der Aufnahme gegenüberliegenden Seite des Sensorhalters mit diesem verbunden und dient als Gegenanschlag für den Anschlag des Kontaktelements, so dass dieser bei ausgebautem Sensor an das Zwischenstück anschlägt und so ein thermischer Kontakt mit dem Heizelement hergestellt wird.

Das elektrische Kontaktmittel weist ein oder mehrere Kontaktelemente zur direkten Kontaktierung des austauschbaren Sensors auf. Die Kontaktelemente und der Sensor sind derart ausgestaltet, dass eine lösbare elektrische Verbindung hergestellt werden kann. Die Kontaktelemente können beispielsweise Federkontakte sein, auf die der Sensor gedrückt wird, oder der Sensor kann Pins oder Stifte aufweisen, welche in vorgespannte Kontaktelemente, zum Beispiel federnde Elemente wie Klammern oder Spangen, eingreifen oder einrasten.

Die Kontaktelemente bestehen im Wesentlichen aus einem thermisch und elektrisch leitenden Material, beispielsweise einem Metall oder einer Metalllegierung, insbesondere Gold, Silber, Platin oder Mischungen daraus.

Das Kontaktelement wird vorzugsweise vorgespannt eingesetzt, so dass der Anschlag bei ausgebautem Sensor gegen das Zwischenstück anschlägt und so thermisch über das Zwischenstück und den Sensorhalter mit dem Heizelement verbunden ist. Beim Einbau des Sensors wird dieser mittels eines Befestigungselements auf die Kontaktelemente gedrückt, so dass ein elektrischer Kontakt zum Sensor hergestellt wird. Zudem wird beim Einsetzen des Sensors die thermische Kontaktierung zum Zwischenstück aufgehoben. Das Aufheben der Kontaktierung zum Zwischenstück ist wichtig, da das System sonst mechanisch überbestimmt wäre und die thermische Kontaktierung während einer Messung zudem zu Störungen führen könnte. Der eingesetzte Sensor schliesst zudem den das Kontaktelement enthaltenden Bereich der Thermoanalysevorrichtung ab, wodurch ein Fluten des Innenraums der Thermoanalysevorrichtung mit einem Spül- oder Trockengas ermöglicht wird, was die Kondenswasserbildung und die Eisbildung zusätzlich reduziert.

Das Kontaktmittel kann mehrere Kontaktelemente umfassen, so dass verschiedene Schaltelemente auf dem eingesetzten Sensor direkt kontaktiert werden können, um elektrische Signale zwischen mindestens einer externen oder internen Steuereinheit und dem Sensor zu übertragen.

Auf diese Weise kann die Temperatur des mindestens einen Kontaktelements unabhängig von der Temperatur der Vorrichtung und unabhängig vom Betriebszustand des Kühlelements über das Heizelement erhöht werden. Diese Temperaturerhöhung kann sowohl mit eingebautem, als auch mit ausgebautem Sensor durchgeführt werden.

In einer bevorzugten Ausgestaltung ist ein Isolator zwischen dem Kühlelement und dem Heizelement angeordnet. Der Isolator kann beispielsweise als flache Scheibe aus einem Kunststoff wie beispielsweise PMMA ausgebildet sein. Das Material sollte ein elektrischer und/oder thermischer Isolator sein und zudem kein oder nur möglichst wenig Wasser aufnehmen können. Eingelagertes Wasser würde die Isolationseigenschaften verändern und könnte durch Einfrieren sogar zu einer Beschädigung des Isolators führen. Das Material sowie dessen Stärke werden derart gewählt, dass der thermische Widerstand des Isolators an die Heizleistung des Heizelements angepasst ist. Auf diese Weise kann das Heizelement gegen den Isolator heizen, welcher die Wärmeausbreitung in der Thermoanalysevorrichtung zumindest teilweise einschränkt. Durch Wahl eines geeigneten, an die Heizleistung des Heizelements angepassten Isolatormaterials kann die zum Aufheizen bzw. Konstanthalten der Temperatur des Sensors benötigte Energiemenge optimiert und vorzugweise klein gehalten werden. Zudem wird so ein schnelles Aufheizen des Sensors ermöglicht, ohne dass das Kühlelement abgeschaltet oder aufgeheizt werden muss. Vorzugsweise findet ein Wechsel des Sensors bei Temperaturen oberhalb von Null Grad Celsius statt, vorzugsweise bei Temperaturen zwischen etwa 10°C und etwa 50°C, insbesondere bis etwa 35°C, wobei gewährleistet werden sollte, dass der Sensor vorzugsweise innerhalb von weniger als ca. 30 min wieder auf die gewünschte Anfangstemperatur abgekühlt werden kann.

Das Heizelement ist vorzugsweise eine Flachheizung oder ein Draht, welcher spiral-oder mäanderförmig auf dem Isolator, einer Seite des Sensorhalters oder einem separaten Trägerelement ausgebildet ist. Das Heizelement ist zwischen dem Sensorhalter und dem Isolator angeordnet.

In einer weiteren Ausgestaltung kann das Heizelement eine Warmluftquelle aufweisen, deren Luft- oder Gasstrom auf den Sensorhalter ausgerichtet ist.

Das Kühlelement kann mit einem externen Kühler verbunden sein, so dass die Vorrichtung auf kryogene Temperaturen abkühlbar ist. Der externe Kühler kann ein Kryostat, ein Intracooler oder eine Kältefluid-Leitung beispielsweise mit einem flüssigen Gas wie Stickstoff oder Helium sein.

Insbesondere die Kombination von Sensorhalter, Heizelement, Isolator und Kühlelement mit angeschlossenem Kühler ermöglicht den bereits vorangehend beschriebenen schnellen Wechsel des Sensors unabhängig vom Betriebszustand des Kühlelements auch bei tiefen und sehr tiefen Temperaturen im Inneren der Thermoanalysevorrichtung. Zudem verhindert diese Kombination auch die Eisbildung innerhalb der Vorrichtung, welche bei den zuvor beschriebenen Forschungsgeräten und -vorrichtungen bei einem Wechsel des Sensors nahezu unvermeidlich ist.

Thermoanalytische Messungen sollten unter möglichst reproduzierbaren Bedingungen durchgeführt werden. So ist es vorteilhaft, wenn in der Thermoanalysevorrichtung eine gleichförmige und vor allem reproduzierbare Atmosphäre herrscht. Um dieses zu erreichen, weisen der Isolator, der Sensorhalter und der austauschbare Sensor Durchlässe auf, welche zum Durchlass und zur Lenkung eines Gasstroms dienen. Als Gase können Schutzgase, wie beispielsweise Stickstoff oder Argon, eingesetzt werden. Weiterhin wäre auch der Einsatz reaktiver Gase denkbar, welche mit der Probe reagieren können, um beispielsweise Oxidationsprozesse zu untersuchen. Die Durchlässe sind derart angeordnet, dass der Gasstrom die Messung nicht wesentlich beeinflusst. Das Fluten der Thermoanalysevorrichtung mit einem geeigneten Gas hat zudem den Vorteil, dass die Kondensation von Wasser sowie eine Eisbildung verhindert oder zumindest stark reduziert werden können.

Das Kontaktmittel weist neben dem mindestens einen Kontaktelement einen Sockel auf, mit dem ein Ende des Kontaktelements verbunden ist. Zudem ist das Kontaktmittel über ein Verbindungsmittel mit einem hohen thermischen Widerstand elektrisch mit einer Steuereinheit verbunden.

Die mindestens eine Steuereinheit ist vorzugsweise derart ausgestaltet, dass sie einerseits die Vorrichtung steuert und regelt und zudem Messdaten zur Bestimmung thermoanalytischer Eigenschaften einer Probe auf dem Sensor oder des Sensors selbst erfasst und auswertet. Selbstverständlich wäre es auch möglich, dass die von der Steuereinheit erfassten Daten zur Auswertung an eine weitere externe Einheit geleitet werden.

Die Kontaktelemente sind über ein Verbindungsmittel bzw. eine elektrische Leitung, welche ein Kabel mit einer Vielzahl von gegeneinander und nach aussen isolierten Drähten sein kann, mit der Steuereinheit verbunden. Das Verbindungsmittel kann beispielsweise einen Stecker oder eine Lötverbindung zum Verbinden der elektrischen Leitung mit den Kontaktelementen bzw. dem Kontaktmittel aufweisen.

Weiterhin kann der Sensorhalter eine Positionierhilfe für den austauschbaren Sensor aufweisen, welche die Aufnahme begrenzt. Vorzugsweise umfasst die Positionierhilfe mehrere Positionierelemente, welche so angeordnet und/oder ausgestaltet sind, dass der Sensor nur in einer vorgegebenen Ausrichtung in die Aufnahme eingesetzt werden kann.

Der Sensor kann mittels eines Befestigungselements auf dem Sensorhalter befestigt werden. Zudem dient das Befestigungselement dazu den eingesetzten bzw. eingebauten Sensor in die Aufnahme zu drücken, so dass ein elektrischer Kontakt mit dem Kontaktmittel hergestellt werden kann.

Das Befestigungselement kann eine Aussparung aufweisen, welche einen Teil der Oberfläche des austauschbaren Sensors freilässt. Diese Aussparung erlaubt es dem Anwender, eine Probe auf den in die Vorrichtung eingesetzten und fixierten Sensor aufzubringen und/oder deren Verhalten während einer Messung optisch zu verfolgen.

Die vorangehend beschriebene Thermoanalysevorrichtung kann im Wesentlichen in einem thermisch isolierten Gehäuse angeordnet sein, welches vorzugsweise eine oder mehrere thermische Isolationen aufweisen. Weiterhin kann das Gehäuse einen optisch transparenten Deckel aufweisen, so dass der Benutzer die Vorgänge im Inneren der Vorrichtung optisch verfolgen kann.

Die mindestens eine mit der Thermoanalysevorrichtung verbundene Steuereinheit dient sowohl zur Regelung der verschiedenen Temperaturen innerhalb der Thermoanalysevorrichtung als auch zur Steuerung der Messung auf oder durch den Sensor. Die Steuereinheit kann sowohl als interne als auch als externe Einheit ausgestaltet sein.

Weiterhin kann die Thermoanalysevorrichtung mindestens einen Temperatur-Sensor aufweisen, welcher mit der Steuereinheit verbunden ist, so dass die gemessenen Werte zur Einstellung der Temperaturkontrolleinrichtung herangezogen werden können. Mit dem mindestens einen Temperatur-Sensor kann die tatsächliche Temperatur, die Temperatur des Sensorhalters und/oder die Temperatur an einer beliebigen anderen Stelle innerhalb der Thermoanalysevorrichtung bestimmt werden. Ein geeigneter, austauschbarer Sensor für eine derartige Thermoanalysevorrichtung kann mindestens eine Messposition für eine Probe, eine Sensor-Temperaturkontrolleinrichtung, ein Mittel zur Einstellung eines vorgegebenen Temperaturprogramms von Temperatur-Zeit-Sollwerten und mindestens ein der Messposition zugeordnetes Mittel zur Signalerfassung, insbesondere zur Temperaturerfassung, aufweisen, so dass mit der Vorrichtung mindestens eine thermoanalytische Eigenschaft einer auf dem Sensor angeordneten Probe bestimmbar ist. Der Sensor ist vorzugsweise ein MEMS-Sensor.

Vorzugsweise ist das Mittel zur Einstellung eines vorgegebenen

Temperaturprogramms von Temperatur-Zeit-Sollwerten im Sensor integriert, beispielsweise in Form einer elektrischen Widerstandsheizungs, welche als Teil der Sensorschaltung ausgebildet und thermisch mit der Messposition verbunden ist. Ein derartig ausgestalteter Sensor wird hier als aktiver Sensor bezeichnet.

In einer weiteren Ausgestaltung ist der Sensor als Wärmeflusssensor ausgestaltet. Dazu können die Mittel zur Temperaturerfassung in Form von Thermoelementen ebenfalls direkt auf dem Sensor ausgebildet und angeordnet sein. Der Sensor selbst kann somit zusammenwirkend mit der Steuereinheit die Funktionen eines Thermoanalysegeräts bereitstellen und dient zur Untersuchung und Messung der temperaturabhängigen Eigenschaften einer Probe, welche einem Temperaturprogramm unterworfen wird. Der Sensor wird dazu in die mit der Steuereinheit verbundene Thermoanalysevorrichtung eingebracht.

Die erfindungsgemässe Thermoanalysevorrichtung wird im Folgenden anhand von Ausführungsformen, wie sie schematisch in den Zeichnungen dargestellt sind, beschrieben, wobei gleiche Elemente mit gleichen Bezugszeichen gekennzeichnet sind. Es zeigen:
- Fig. 1: eine Explosionsansicht einer Thermoanalysevorrichtung;
- Fig. 2: eine Aufsicht auf einen Sensorhalter mit Positionierhilfen;
- Fig. 3: eine Aufsicht auf eine in einem Gehäuse angeordneten Thermoanalysevorrichtung;
- Fig. 4: eine schematische Teildarstellung einer Thermoanalysevorrichtung ohne Sensor im Schnitt;
- Fig. 5: eine schematische Teildarstellung einer Thermoanalysevorrichtung mit eingesetztem Sensor im Schnitt;
- Fig. 6: eine schematische Darstellung eines weiteren Kontaktmittels und eines weiteren Sensors.

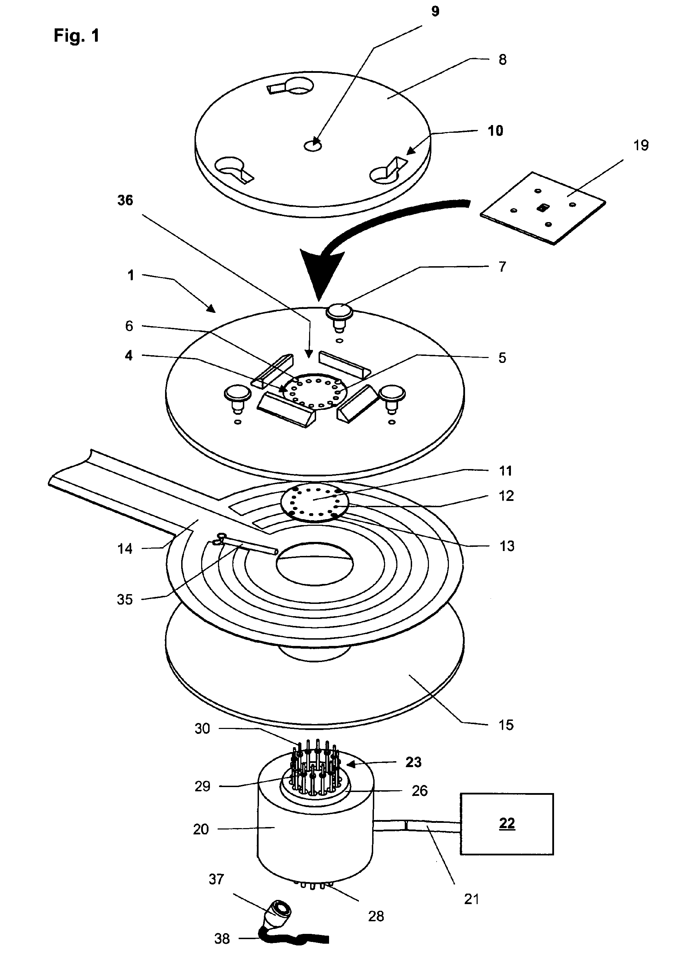

Figur 1 zeigt eine Explosionsansicht einer erfindungsgemässen

Thermoanalysevorrichtung. Verbindungs- und/oder Befestigungsmittel sowie zugehörige Durchführungen zwischen den Bauteilen sind bis auf wenige Ausnahmen aus Gründen der Übersichtlichkeit in den Figuren nicht gezeigt.

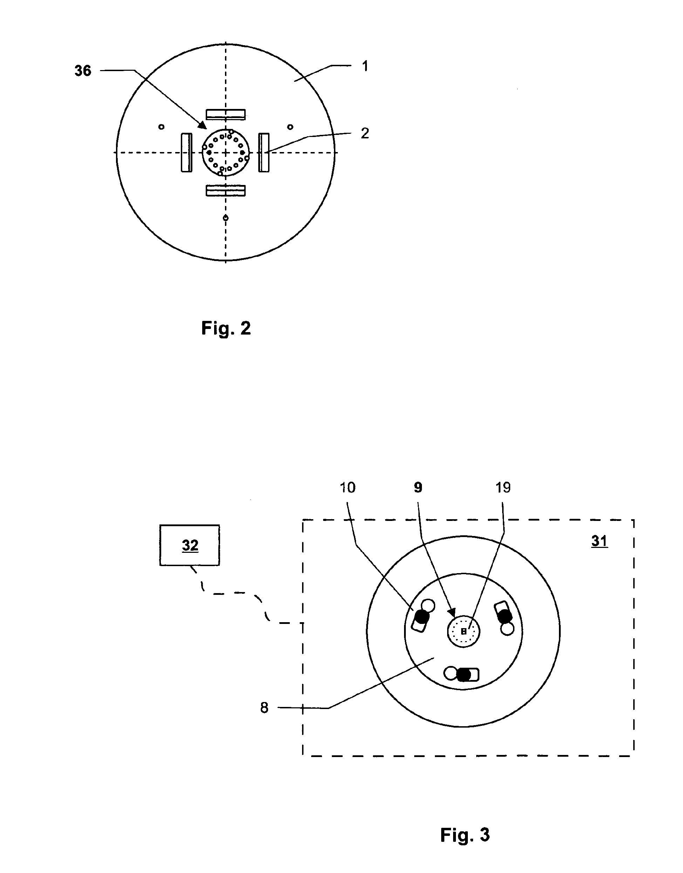

Die Thermoanalysevorrichtung umfasst mehrere, übereinander angeordnete und miteinander verbindbare Bauteile. Zu diesen gehört ein Sensorhalter 1, welcher eine Aufnahme 36 für einen Sensor 19 aufweist. Der Sensor 19 ist hier in ausgebautem Zustand dargestellt, wobei der Pfeil dessen Position im eingebauten Zustand andeutet. Die Aufnahme 36 wird von vier Positionierhilfen 2 begrenzt. Weiterhin weist der Sensorhalter 1 einen zentralen im Vergleich zur Oberfläche des Sensorhalters 1 abgesenkten Bereich 4 auf. Der Bereich 4 weist mehrere erste Durchführungen 5 für ein zur Kontaktierung eines Sensors 19, insbesondere eines MEMS-Sensors, geeignetes elektrisches Kontaktmittel auf und kann, wie hier gezeigt zudem mehrere erste Gasdurchlässe 6 (s. a. Fig. 3) aufweisen. Auf dem Sensorhalter 1 sind zudem mehrere Stifte 7 befestigt, an welchen jeweils Einrasthilfen 10 des Befestigungselements 8 einrasten können.

Das Befestigungselement 8 ist derart angeordnet, dass es einen in der Aufnahme 36 befindlichen Sensor 19 gegen ein Kontaktmittel pressen und auf dem Sensorhalter 1 fixieren kann. Das Befestigungselement 8 weist eine zentrale Aussparung 9 auf, welche im zusammengebauten Zustand einen Teil des Sensors 19, insbesondere eine auf dem Sensor 19 ausgebildete Messposition, freilässt, so dass der Sensor 19 beispielsweise mit einer Probe beschickt werden kann oder Veränderungen der Probe oder des Sensors 19 optisch verfolgt werden können. Vorzugsweise handelt es sich bei dem Sensor 19 um einen DSC-, TGA-MEMS-Sensor, um einen MEMS-Sensor zur Bestimmung der Dielektrizitätskonstante oder eine Kombinationen daraus, mit welchem mindestens eine thermoanalytische Eigenschaft einer auf dem Sensor 19 angeordneten Probe oder des Sensors 19 ermittelt werden kann.

Zur Befestigung an den Stiften 7 des Sensorhalters 1 weist das Befestigungselement 8 mehrere Einrasthilfen 10 auf, in welche der Kopf eines Stifts 7 einrasten kann. Je nach Ausgestaltung des Sensorhalters 1 und des Befestigungselements 8 können auch andere, dem Fachmann wohlbekannte, lösbare Befestigungssysteme mit geeigneten Befestigungselementen verwendet werden.

Die Vorrichtung umfasst ferner ein thermisch leitendes und elektrisch isolierendes Zwischenstück 11, welches auf der der Aufnahme 36 abgewandten Seite des Sensorhalters 1 befestigt wird. Das Zwischenstück 11 ist vorzugsweise eine Keramikscheibe aus Aluminiumnitrid mit je einer zweiten Durchführung 12 für jedes Kontaktelement. Zudem kann das Zwischenstück, wie hier gezeigt, einen oder mehrere zweite Gasdurchlässe 13 aufweisen. Anstelle von Aluminiumnitrid können auch andere keramische Werkstoffe mit ähnlichen Eigenschaften verwendet werden. Die Positionen der zweiten Durchführungen 12 stimmen mit denen der ersten Durchführungen 5 im Sensorhalter 1 überein, so dass das Kontaktmittel kontaktfrei in den ersten und/oder zweiten Durchführungen 5, 12 geführt wird. Das Zwischenstück 11 dient insbesondere zur Herstellung des thermischen Kontakts zwischen einem Heizelement 14 und den Kontaktelementen bei ausgebautem Sensor 19, also wenn sich kein Sensor 19 in der Aufnahme 36 befindet.

Das Heizelement 14 ist hier als Flachheizung mit einer zentralen Aussparung ausgestaltet. Das Heizelement 14 ist zwischen dem Sensorhalter 1 und einem Isolator 15 angeordnet, so dass das Heizelement 14 zumindest den Sensorhalter 1, das Zwischenstück 11, die Kontaktelemente, sowie einen eingesetzten Sensor 19 erwärmen kann. Die Kontaktelemente werden über den Sensorhalter 1 und den eingesetzten Sensor 19 oder bei ausgebautem Sensor 19 über das Zwischenstück 11 thermisch kontaktiert. Das Heizelement 14 weist zudem einen Temperaturfühler 35 zur Messung und Regelung dessen Temperatur.

Weiterhin kann die Thermoanalysevorrichtung, wie hier gezeigt, einen Gaseinlass aufweisen, durch den ein Gas in die Thermoanalysevorrichtung eingeleitet und durch die Gasdurchlässe 6, 13 strömen kann. Als Gas wird vorzugsweise ein trockenes Schutzgas wie Stickstoff, Argon oder Helium verwendet, so dass sich um die Probe bzw. den Sensor eine Schutzgasatmosphäre ausbreiten kann, wodurch die Einflüsse der Umgebung auf eine Messung vermindert werden können. Weiterhin kann ein reaktives Gas verwendet werden, so dass beispielsweise Oxidationsprozesse oder andere Reaktionen und Prozesse untersucht werden können.

Der Isolator 15 ist hier scheibenförmig ausgebildet und besteht aus einem Material wie beispielsweise PMMA. Das Material sowie dessen Stärke werden vorzugsweise derart gewählt, dass der thermische Widerstand des Isolators 15 an die Heizleistung des Heizelements 14 angepasst ist. Auf diese Weise heizt das Heizelement 14 gegen den Isolator 15, welcher eine Wärmeausbreitung durch den Isolator 15 hindurch in Richtung des Kühlelements stark reduziert. Durch Wahl eines geeigneten, an die Heizleistung des Heizelements 14 angepassten Isolatormaterials mit geeigneter Dicke kann die zum Aufheizen oder Konstanthalten der Temperatur innerhalb der Thermoanalysevorrichtung und insbesondere der Temperatur des Sensors 19 benötigte Energiemenge optimiert und vorzugweise klein gehalten werden.

Weiterhin weisst die Thermoanalysevorrichtung ein Kontaktmittel mit einem Sockel 26 auf, in welchem mehrere Kontaktelemente 23 angeordnet sind. Zudem weist das Kontaktmittel einen Anschluss 28 auf, welcher über einen geeigneten Stecker 37 an eine elektrische Leitung 38 zum Beispiel ein Kabel angeschlossen oder mit diesem verbunden werden kann. Der Stecker 37 und das Kabel 38 sind hier nur angedeutet und nicht massstabsgetreu dargestellt. Das Kabel 38 kann auch über eine Lötverbindung fest mit dem Anschluss 28 verbunden werden. Um einen unnötigen Wärmetransport in die Vorrichtung durch die elektrische Leitung zu verhindern, sollte diese einen möglichst hohen thermischen Widerstand aufweisen, welcher durch die Länge der elektrischen Leitung beeinflussbar ist.

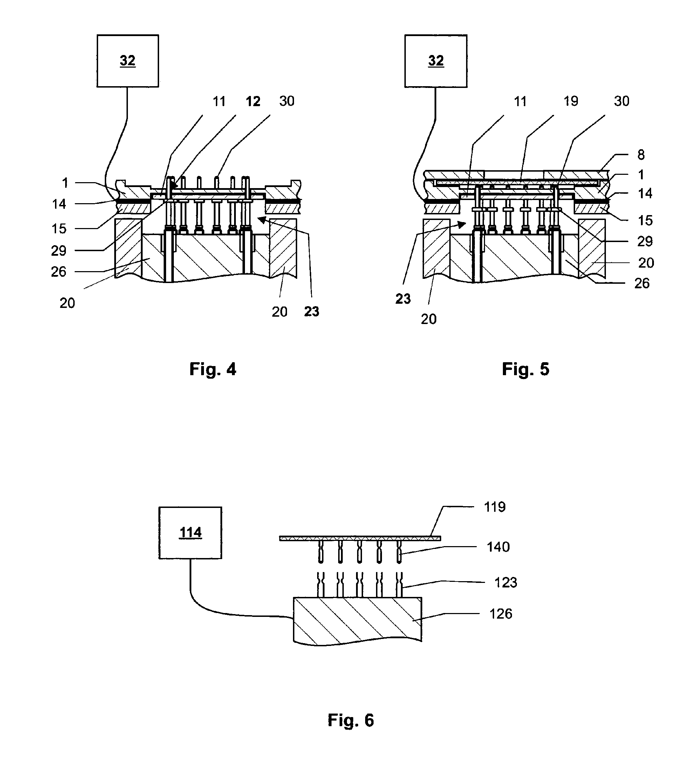

Die Kontaktelemente 23 weisen jeweils ein freies, gegen den Sensor oder das Zwischenstück 11 gerichtetes Ende und ein in einem Sockel 26 fixiertes Ende auf. Vorzugsweise sind die Kontaktelemente 23 Federkontakte und weisen beabstandet zu ihrem freien Ende 30 jeweils einen Anschlag 29 auf. Die Federkontakte 23, wie auch die Anschläge 29 bestehen aus einem elektrisch und thermisch leitenden Material wie beispielsweise Gold, Silber, Platin oder Mischungen daraus. Die freien Enden 30 ragen in der betriebsbereiten Thermoanalysevorrichtung durch die zweiten Durchführungen 12 und die ersten Durchführungen 5. Aufgrund des Anschlags 29 werden die Federkontakte 23 bei ausgebautem Sensor 19 gegen das Zwischenstück 11 gedrückt. In diesem Zustand können die Federkontakte 23 über den Anschlag 29, das Zwischenstück 11 und den Sensorhalter 1 von dem Heizelement 14 beheizt werden, wodurch Kondenswasserbildung oder Vereisen beim Wechsel des Sensors 19 weitestgehend verhindert werden kann (s. Figuren 4 und 5).

Diese Kontaktierung des Kontaktmittels ist besonders vorteilhaft, wenn das Innere der Thermoanalysevorrichtung mittels eines Kühlelements 20 auf kryogene Temperaturen abgekühlt werden soll, da so ein rasches Auftauen des eingebauten Sensors 19 und der Kontaktelemente 23 ohne Abschaltung des Kühlelements 20 und auch ohne Auftauen der gesamten Thermoanalysevorrichtung möglich ist, wodurch nach dem Einsetzen eines anderen Sensors dieser wieder rasch abgekühlt werden kann. Das Kühlelement 20 ist im Wesentlichen ringförmig ausgebildet, umschliesst zumindest teilweise das elektrische Kontaktmittel und weist mindestens einen Anschluss 21 zum Anschluss eines externen Kühlers 22, beispielsweise einen Intracooler, einen Kryostaten oder eine Kältefluid-Leitung, beispielsweise mit flüssigem Stickstoff oder flüssigem Helium, auf.
Figur 2 zeigt eine Aufsicht auf den Sensorhalter 1 aus Figur 1. In der Aufsicht sind vier Positionierhilfen zu erkennen, welche die Aufnahme 36 für den Sensor beschränken.
Figur 3 zeigt eine Aufsicht auf eine Thermoanalysevorrichtung in einem thermisch isolierten Gehäuse 31. Das Gehäuse 31 ist nur angedeutet. In der Aufsicht ist zu erkennen, dass im Betrieb bzw. im zusammengebauten Zustand, die Aussparung 9 im Befestigungselement 8, einen Teil eines eingebauten Sensors 19 freilässt, so dass dieser beispielsweise mit einer Probe beschickt werden kann. Die Thermoanalysevorrichtung ist ferner, wie es hier angedeutet ist, mit einer Steuereinheit 32 verbunden, welche Mittel zur Steuerung und Regelung der Thermoanalysevorrichtung und des Sensors 19 sowie zur Datenerfassung und/oder Auswertung der Messdaten aufweist.

Die Figuren 4 und 5 zeigen eine detaillierte Darstellung der Kontaktierung eines eingebauten Sensors 19 durch das Kontaktmittel sowie die thermische Verbindung des Kontaktmittels mit dem Heizelement 14, genauer des mindestens einen Kontaktelements 23. Beide Figuren zeigen eine schematische Teildarstellung der Vorrichtung, wobei die Bauteile teilweise nicht massstabsgetreu dargestellt sind.

Figur 4 zeigt eine schematische Teildarstellung der Thermoanalysevorrichtung ohne Sensor bzw. mit ausgebautem Sensor im Schnitt. Jeweils ein Ende der Kontaktelemente 23 wird im Sockel 26 des Kontaktmittels geführt und gehalten, wobei das Kontaktmittel von einem Kühlelement 20 umgeben ist. Das freie Ende 30 eines Kontaktelements 23 wird jeweils durch eine Durchführung 12 im Zwischenstück 11 berührungsfrei geführt. Das Zwischenstück 11 dient bei ausgebautem Sensor zudem als Gegenanschlag für den am freien Ende 30 angeordneten Anschlag 29 des Kontaktelements 23, welche hier als Federkontakte oder Federkontaktstifte ausgestaltet und vorgespannt eingesetzt sind.

Das Zwischenstück 11 ist in einer Aussparung des Sensorhalters 1 angeordnet und mit diesem thermisch verbunden. Der Sensorhalter 1 wiederum steht mit dem Heizelement 14 in Kontakt, welches über die mit der Vorrichtung verbundene Steuereinheit 32 geregelt wird. Das Heizelement 14 ist zwischen dem Sensorhalter 1 und dem Isolator 15 angeordnet, wobei der Isolator 15 und das Heizelement 14 derart aufeinander abgestimmt sind, dass bei aktivem Kühlelement möglichst wenig Wärme durch den Isolator 15 hindurch gelangt.

Solange sich kein Sensor in der Thermoanalysevorrichtung befindet, schlagen die Anschläge 29 der Kontaktelement 23 gegen das den Gegenanschlag bildende Zwischenstück 11 an und können so unabhängig vom Betriebszustand des Kühlelements 20 und der Temperatur innerhalb der Thermoanalysevorrichtung mittels des Heizelements 14 erwärmt oder auf einer vorgegebenen Temperatur gehalten werden.

Figur 5 zeigt die gleiche schematische Teildarstellung der Vorrichtung wie Figur 4, jedoch mit eingesetztem Sensor 19. Der Sensor 19 wird mit dem Befestigungselement 8 auf die Kontaktelemente 23 gedrückt, welche dadurch zusammengedrückt werden. Einerseits wird so der elektrische Kontakt zu den Kontaktelementen 23 hergestellt, andererseits werden die Anschläge 29 der Kontaktelemente 23 vom Zwischenstück 11 gegen den Sockel 26 gedrückt, so dass die Anschläge 29 nicht mehr gegen das Zwischenstück 11 anschlagen. Der thermische Kontakt zwischen den Kontaktelementen 23 und dem Heizelement 14 ist nun über den Sensor 19 und den Sensorhalter 1 gegeben.

Figur 6 zeigt eine weitere Ausgestaltung des Kontaktmittels und des Sensors 119 für eine erfindungsgemässe Thermoanalysevorrichtung. Der Sensor 119 weist Pins oder Stifte 140 auf, welche in die Kontaktmittel 123 einrasten können, die blattfederartig ausgestaltet sind. Das Kontaktmittel kann, wie hier angedeutet auch über einen Sockel 126 thermisch mit einem Heizelement 114 verbunden sein.

**Bezugszeichenliste**

| | | | |
|---|---|---|---|
| 1 | Sensorhalter | 21 | Anschluss für Kühler |
| 2 | Positionierhilfe | 22 | Kühler |
| 4 | abgesenkter Bereich | 23, 123 | Kontaktelement |
| 5 | erste Durchführung | 26, 126 | Sockel |
| 6 | erster Gasdurchlass | 28 | Anschluss |
| 7 | Stift | 29 | Anschlag |
| 8 | Befestigungselement | 30 | freies Ende |
| 9 | Aussparung | 31 | Gehäuse |
| 10 | Einrasthilfe | 32 | Steuereinheit |
| 11 | Zwischenstück | 35 | Temperaturfühler |
| 12 | zweite Durchführung | 36 | Aufnahme |
| 13 | zweiter Gasdurchlass | 37 | Stecker |
| 14, 114 | Heizelement / Flachheizung | 38 | elektrische Leitung / Kabel |
| 15 | Isolator | 39 | Kontaktstift |
| 19, 119 | Sensor | 140 | Stift |
| 20 | Kühlelement | | |

## Patentansprüche

1. Thermoanalysevorrichtung mit einem austauschbaren Sensor (19), insbesondere einem MEMS-Sensor, mit einem Sensorhalter (1), welcher eine Aufnahme (36) für den austauschbaren Sensor (19) aufweist, mit einem elektrischen Kontaktmittel zur Kontaktierung des austauschbaren Sensors (19), mit einem Kühlelement (20) zum Abkühlen der Thermoanalysevorrichtung und mit einem Heizelement (14), **dadurch gekennzeichnet, dass** das elektrische Kontaktmittel mindestens ein Kontaktelement (23) aufweist, welches bei eingesetztem Sensor (19) mit diesem kontaktiert ist, wobei das Kontaktelement (23) ein freies Ende (30) zur Kontaktierung des austauschbaren Sensors (19) und benachbart zum freien Ende (30) einen Anschlag (29) aufweist, so dass das Kontaktelement (23) bei eingesetztem Sensor (19) über das freie Ende (30) und bei ausgebautem Sensor über den Anschlag (29) thermisch mit dem Heizelement (14) verbunden ist und bei ausgebautem Sensor (19) im Wesentlichen unabhängig vom Betriebszustand des Kühlelements (20) aufheizbar ist.

2. Thermoanalysevorrichtung nach Anspruch 1, **dadurch gekennzeichnet, dass** die Vorrichtung ein Zwischenstück (11) aufweist, welches thermisch leitend und vorzugsweise elektrisch isolierend ist und je eine Durchführung (12) für das mindestens eine Kontaktelement (23) aufweist.

3. Thermoanalysevorrichtung nach Anspruch 1 oder 2, **dadurch gekennzeichnet, dass** ein Isolator (15) zwischen dem Kühlelement (20) und dem Heizelement (14) angeordnet ist.

4. Thermoanalysevorrichtung nach einem der Ansprüche 1 bis 3, **dadurch gekennzeichnet, dass** das Heizelement (14) als Draht oder Flachheizung ausgestaltet ist.

5. Thermoanalysevorrichtung nach einem der Ansprüche 1 bis 4, **dadurch gekennzeichnet, dass** das Kühlelement (20) mit einem externen Kühler (22) verbunden ist, so dass die Vorrichtung auf kryogene Temperaturen kühlbar ist.

6. Thermoanalysevorrichtung nach einem der Ansprüche 1 bis 5, **dadurch gekennzeichnet, dass** der Isolator (15) und der Sensorhalter (1) erste und zweite Durchlässe (6, 13) zum Durchlass und zur Lenkung eines Gasstroms aufweisen.

7. Thermoanalysevorrichtung nach einem der Ansprüche 1 bis 6, **dadurch gekennzeichnet, dass** das Kontaktmittel über ein Verbindungsmittel (38) mit einem hohen thermischen Widerstand elektrisch mit einer Steuereinheit verbunden ist.

8. Thermoanalysevorrichtung nach einem der Ansprüche 1 bis 7, **dadurch gekennzeichnet, dass** der Sensorhalter (1) eine Positionierhilfe (2) für den austauschbaren Sensor (19) aufweist.

9. Thermoanalysevorrichtung nach einem der Ansprüche 1 bis 8, **dadurch gekennzeichnet, dass** die Vorrichtung ein Befestigungselement (8) zur Befestigung des austauschbaren Sensors (19) auf dem Sensorhalter (1) aufweist.

10. Thermoanalysevorrichtung nach einem der Ansprüche 1 bis 9, **dadurch gekennzeichnet, dass** der Sensor (19) mindestens eine Messposition für eine Probe, eine Temperaturkontroll-Einrichtung, ein Mittel zur Einstellung eines vorgegebenen Temperaturprogramms von Temperatur-Zeit-Sollwerten und mindestens einer der Messposition zugeordneten Mittel zur Temperaturerfassung aufweist, so dass mit der Thermoanalysevorrichtung mindestens eine thermoanalytische Eigenschaft einer auf dem Sensor (19) angeordneten Probe bestimmbar ist.

11. Thermoanalysevorrichtung nach Anspruch 10, **dadurch gekennzeichnet, dass** das Mittel zur Einstellung eines vorgegebenen Temperaturprogramms von Temperatur-Zeit-Sollwerten im Sensor integriert ist.

12. Thermoanalysevorrichtung nach Anspruch 10 oder 11, **dadurch gekennzeichnet, dass** der Sensor (19) als Wärmeflusssensor ausgestaltet ist.

13. Thermoanalysevorrichtung nach einem der Ansprüche 1 bis 12, **dadurch gekennzeichnet, dass** die Vorrichtung im Wesentlichen in einem thermisch isolierten Gehäuse (31) angeordnet ist.

## Claims

1. A thermal analysis device with a replaceable sensor (19), in particular a MEMS sensor, with a sensor holder (1) having a receptacle (36) for the replaceable sensor (19), with an electrical contacting means for contacting the replaceable sensor (19), with a cooling element (20) for cooling the thermal analysis device, and with a heating element (14), **characterised in that** the electrical contacting means comprises at least one contact element (23), which when a sensor (19) is mounted, is contacted with the same, wherein the contact element (23) comprises a free end (30) for contacting the replaceable sensor (19), wherein the contact element (23) has a stop (29) adjacent to the free end (30), so that the contact element (23) is thermally connected with the heating element (14) via the free end (30) thereof when the replaceable sensor (19) is mounted and via the stop (29) when the replaceable sensor is not mounted and can be heated substantially independently of the operating state of the cooling element (20) when the replaceable sensor (19) is not mounted.

2. Thermal analysis device according to Claim 1, **characterised in that** the device comprises a spacer (11), which is thermally conductive and preferably electrically insulating and comprises one leadthrough (12) each for the at least one contact element (23).

3. Thermal analysis device according to Claim 1 or 2, **characterised in that** an insulator (15) is arranged between the cooling element (20) and the heating element (14).

4. Thermal analysis device according to any one of Claims 1 to 3, **characterised in that** the heating element (14) is configured as a wire or flat heater.

5. Thermal analysis device according to any one of Claims 1 to 4, **characterised in that** the cooling element (20) is connected with an external cooler (22), so that the device can be cooled to cryogenic temperatures.

6. Thermal analysis device according to any one of Claims 1 to 5, **characterised in that** the insulator (15) and the sensor holder (1) comprise first and second passages (6, 13) for letting through and for steering a gas flow.

7. Thermal analysis device according to any one of Claims 1 to 6, **characterised in that** the contacting means is electrically connected with a control unit via a connection means (38) with a high thermal resistance.

8. Thermal analysis device according to any one of Claims 1 to 7, **characterised in that** the sensor holder (1) comprises a positioning aid (2) for the replaceable sensor (19).

9. Thermal analysis device according to any one of Claims 1 to 8, **characterised in that** the device comprises a fixing element (8) for affixing the replaceable sensor (19) on the sensor holder (1).

10. Thermal analysis device according to any one of Claims 1 to 9, **characterised in that** the sensor (19) comprises at least one measuring position for a sample, a temperature control device, a means for setting a predetermined temperature program of temperature/time setpoint values and at least one means, assigned to the measuring position, for temperature determination, so that at least one thermal analytical property of a sample arranged on the sensor (19) can be determined with the thermal analysis device.

11. Thermal analysis device according to Claim 10, **characterised in that** the means for setting a predetermined temperature program of temperature/time setpoint values is integrated in the sensor.

12. Thermal analysis device according to Claim 10 or 11, **characterised in that** the sensor (19) is configured as a heat flux sensor.

13. Thermal analysis device according to any one of Claims 1 to 12, **characterised in that** the device is essentially arranged in a thermally insulated housing (31).

## Revendications

1. Dispositif d'analyse thermique avec un capteur remplaçable (19), en particulier un capteur MEMS, avec un support de capteur (1) comprenant une admission (36) pour le capteur remplaçable (19), avec un moyen de contact électrique pour la mise en contact du capteur remplaçable (19), avec un élément de refroidissement (20) pour le refroidissement du dispositif d'analyse thermique et avec un élément de chauffage (14), **caractérisé en ce que** le moyen de contact électrique comprend au moins un élément de contact (23) en contact avec celui-ci lorsque le capteur (19) est installé, dans lequel l'élément de contact (23) comprend une extrémité libre (30) pour la mise en contact du capteur remplaçable (19) et une butée (29) adjacente à l'extrémité libre (30), de sorte que l'élément de contact (23) est relié thermiquement à l'élément de chauffage (14) par l'extrémité libre (30) lorsque le capteur (19) est installé et par la butée (29) lorsque le capteur est enlevé, et peut être chauffé quasiment indépendamment de l'état de fonctionnement de l'élément de refroidissement (20) lorsque le capteur (19) est enlevé.

2. Dispositif d'analyse thermique selon la revendication 1, **caractérisé en ce que** le dispositif comprend une pièce intermédiaire (11), laquelle est thermiquement conductrice et de préférence électriquement isolante et comprend respectivement un passage (12) pour l'au moins un élément de contact (23).

3. Dispositif d'analyse thermique selon la revendication 1 ou 2, **caractérisé en ce qu'**un isolateur (15) est agencé entre l'élément de refroidissement (20) et l'élément de chauffage (14).

4. Dispositif d'analyse thermique selon l'une des revendications 1 à 3, **caractérisé en ce que** l'élément de chauffage (14) est conçu comme un fil métallique ou élément chauffant plat.

5. Dispositif d'analyse thermique selon l'une des revendications 1 à 4, **caractérisé en ce que** l'élément de refroidissement (20) est relié à un système de refroidissement externe (22), de sorte que le dispositif peut être refroidi à des températures cryogéniques.

6. Dispositif d'analyse thermique selon l'une des revendications 1 à 5, **caractérisé en ce que** l'isolateur (15) et le support de capteur (1) comprenant des premier et deuxième passages (6, 13) pour le passage et le guidage d'un flux de gaz.

7. Dispositif d'analyse thermique selon l'une des revendications 1 à 6, **caractérisé en ce que** le moyen de contact est relié électriquement à une unité de commande avec une résistance thermique élevée, par le biais d'un moyen de liaison (38).

8. Dispositif d'analyse thermique selon l'une des revendications 1 à 7, **caractérisé en ce que** le support de capteur (1) comprend un moyen de positionnement (2) pour le capteur remplaçable (19).

9. Dispositif d'analyse thermique selon l'une des revendications 1 à 8, **caractérisé en ce que** le dispositif comprend un élément de fixation (8) pour la fixation du capteur remplaçable (19) sur le support de capteur (1).

10. Dispositif d'analyse thermique selon l'une des revendications 1 à 9, **caractérisé en ce que** le capteur (19) comprend au moins une position de mesure pour un échantillon, un dispositif de contrôle de la température, un moyen pour le réglage d'un programme de température prédéfini de valeurs de consigne température-temps, ainsi que des moyens attribués à la position de mesure pour la détection de température, de sorte que le dispositif d'analyse thermique permet de déterminer au moins une propriété d'analyse thermique d'un échantillon disposé sur le capteur (19).

11. Dispositif d'analyse thermique selon la revendication 10, **caractérisé en ce que** le moyen pour le réglage d'un programme de température prédéfini des valeurs de consigne température-temps est intégré dans le capteur.

12. Dispositif d'analyse thermique selon la revendication 10 ou 11, **caractérisé en ce que** le capteur (19) est conçu comme un capteur de flux de chaleur.

13. Dispositif d'analyse thermique selon l'une des revendications 1 à 12, **caractérisé en ce que** le dispositif est agencé essentiellement dans un boîtier thermiquement isolé (31).
